# EUROPÄISCHE PATENTANMELDUNG

(11) **EP 4 480 794 A1**
(43) Veröffentlichungstag der Anmeldung: **25.12.2024**
(21) Anmeldenummer: 24167443.1
(22) Anmeldetag: 28.03.2024
(51) Int. Cl.: B62H 5/00, B62K 21/12, E05B 71/00, B62H 5/20, B62K 19/40

(54) **AUSZUGELEMENT, INSBESONDERE FAHRRADSCHLOSS**

(30) Priorität: 21.06.2023 DE 102023116169
(71) Anmelder: Lenklock GmbH, 72461 Albstadt (DE)
(72) Erfinder: Plankenhorn, Andreas, 72458 Albstadt (DE); Bondrea, Bianca, 72458 Albstadt (DE); Böhm, Hans-Peter, 73728 Esslingen am Neckar (DE)
(74) Vertreter: Christ, Niko

(57) **Zusammenfassung**

Die Erfindung schlägt ein Auszugelement für verschiedene Anwendungen vor, welches in einem Rohrende angeordnet werden kann. Ein Anker sichert das Auszugelement gegen ein Entnehmen, ein Auszug ist vermittels eines Verbindungselements an dem Anker gehalten.

Hierbei sieht der Anker wenigstens ein radial ausrückbares Spreizelement vor, welches mit einem Betätigungselement ausgerückt werden kann. Ein solches Betätigungselement kann mithilfe eines an dem Auszug oder dem Verbindungselement vorgesehenen Werkzeugabschnitt betätigt werden, so dass der Anker zwar in dem Rohr fest gehalten ist aber dennoch nicht in dem Rohr verschweißt werden muss, insbesondere eine Nachrüstung unproblematisch erfolgen kann.

## Beschreibung

Die vorliegende Erfindung betrifft ein Auszugelement, umfassend einen Anker zur unbeweglichen Fixierung in einem wenigstens einseitig offenen Rohr, wobei der Anker vermittels wenigstens eines Verbindungselements mit einem an einem Rohrende des Rohrs ein- und ausschiebbaren Auszug verbunden ist, wobei das Verbindungselement durch wenigstens einen Durchlass des Ankers hindurchgeführt ist und ein Anschlagelement aufweist, welches einen Durchgang des Verbindungselements durch den Durchlass verhindert, wobei der Anker wenigstens ein vermittels eines Betätigungselements radial ausrückbares Spreizelement aufweist und durch Ausrücken des Spreizelements an einer Innenwandung des Rohrs kraftschlüssig festlegbar ist.

Ein solches Auszugelement ist bereits aus der DE 31 03 784 A1 vorbekannt. Weitere Auszugelemente ergeben sich aus der US 5,683,200 A, der DE 83 25 621 U1, der GB 2 546 698 A und der DE 197 14 013 A1.

Ein solches Auszugelement ist in zahlreichen Ausführungen denkbar und für alle Anwendungen geeignet, bei denen ein herausziehbares Element so in einem offenen Rohrende gelagert wird, dass es begrenzt herausgezogen werden kann, aber an einem Anschlag gehalten wird. Solche Anwendungen können von einem Handtuchhalter über einen Kleiderhaken bis hin zu komplexeren Anwendungen wie Fahrradschlössern reichen. Letztere stellen im vorliegenden Fall eine besonders bevorzugte Ausgestaltung dar.

Entsprechende Auszugelemente, die als Fahrradschloss eingesetzt werden, sind im Stand der Technik auch bereits bekannt. So kennt die DE 20 2022 000 370 U1 ein Auszugelement, welches in Form eines Stahlseils in dem rohrförmigen Fahrradlenker verstaut wird und dort durch einen Anker gesichert ist. Der Anker ist dort allerdings über ein Stahlseil mit einer Kappe verbunden, die auf einer gegenüberliegenden Seite des Rohres befestigt werden muss und damit nicht für einseitig offene Rohre geeignet.

Die JP 2003314115 A sieht eine Lösung für ein vollständig entnehmbares Auszugelement vor, wobei in einer Variante auch eine Befestigung mittels eines Stoppers erfolgt. Dieser kann jedoch mit etwas zusätzlicher Kraft herausgezogen werden.

Bei der ES 1 177 611 U ist vorgesehen, dass ein Anschlag durch einen eingeschweißten Ring gebildet wird, an der ein an dem Ende des Verbindungselements angeordnetes Anschlagelement in Form einer Stahlkugel anschlägt. Diese Lösung eignet sich jedoch ausdrücklich nur für die Installation während der Herstellung des Fahrrads.

In der US 5,752,416 A und der JP 2003328625 A2, ebenso in der US9580936B2, ist eine vollständige Herausnahme des Fahrradschlosses aus dem Lenker vorgesehen, so dass das Schloss nur in dem Rohr des Lenkers aufbewahrt wird, ohne dass es eine weitere Interaktion gibt.

In der US 4,064,715 A ist ein Schloss vorgesehen, das aus einer Hülse herausgeschoben werden kann, an der es mittels eines Seils befestigt ist. Das Seil ist an der Hülse befestigt und wird auf einer Wickelspule des Auszugs aufgewickelt. Es ist allerdings unklar, wie die Hülse in dem Rohr befestigt werden kann.

Die DE 203 17 845 U1 sieht einen Auszug vor, welcher an einem festen Anschlag im Rohr des Lenkers anschlägt, wobei die Offenbarung eine unlösbare, herstellerseitige Verankerung im Lenker vorsieht.

Die US 2002/0073750 A1 sieht einen endständigen Stopfen vor, an dem ein Schloss befestigt sein kann. Durch eine Schraubverbindung wird der einstückig mit dem Schloss verbundene Anker in dem Rohrende befestigt und ein Deckel kann zusammen mit einem Verbindungselement zur Verbindung eines festen Gegenstands mit dem Schloss eingesetzt werden.

Allerdings sieht der vorliegende Stand der Technik kein Auszugelement im Allgemeinen oder ein Fahrradschloss in Form eines solchen Auszugelements im Besonderen vor, welches im Zuge einer Nachrüstung in einem Rohrende kraftschlüssig verankert werden kann. Daher liegt der vorliegenden Erfindung die Aufgabe zu Grunde, ein solches Auszugelement vorzuschlagen.

Dies gelingt durch ein Auszugelement gemäß den Merkmalen des unabhängigen Anspruchs 1, sowie durch Varianten gemäß den nebengeordneten Ansprüchen 4 und 10. Sinnvolle Ausgestaltungen des Auszugselements, insbesondere in seiner Ausgestaltung als Fahrradschloss, können den sich jeweils anschließenden abhängigen Ansprüchen entnommen werden.

Vorgesehen ist insoweit ein Auszugelement, umfassend einen Anker zur unbeweglichen Fixierung in einem wenigstens einseitig offenen Rohr, wobei der Anker vermittels wenigstens eines Verbindungselements mit einem an einem Rohrende des Rohrs ein- und ausschiebbaren Auszug verbunden ist. Ein solches Auszugelement ist erfindungsgemäß dadurch gekennzeichnet, dass das Verbindungselement durch wenigstens einen Durchlass des Ankers hindurchgeführt ist und ein Anschlagelement aufweist, welches einen Durchgang des Verbindungselements durch den Durchlass verhindert, wobei der Anker wenigstens ein vermittels eines Betätigungselements radial ausrückbares Spreizelement aufweist und durch Ausrücken des Spreizelements an einer Innenwandung des Rohrs kraftschlüssig festlegbar ist.

Während der Auszug als solcher in das Rohrende eingeschoben wird und dort aufbewahrt werden kann, befindet sich der Anker stets weiter hinten in dem Rohr, also tiefer in das Rohrende eingeschoben. Dort wird der Anker aufgespreizt und auf diese Art und Weise mit dem Rohr kraftschlüssig verbunden. Mit besonderem Vorteil kann das Spreizelement an seiner der Rohrinnenwand zugwandten Seite zusätzlich eine raue Oberfläche aufweisen, welche sich an die Rohrinnenwand anschmiegen oder auch punktuell in diese hineindrücken kann. Eine Längsverschiebung des Ankers in dem Rohr ist damit vermieden. Im Sinne der Erfindung ist einem Rohr auch eine Bohrung, ein Dübel oder eine andersartige Einschuböffnung gleichgestellt.

Wird eine solche Lösung etwa für Wandhaken eingesetzt, so können diese bei Nichtgebrauch in das Rohr hinein verstaut werden und tragen auf der Wand nicht auf. Bei Bedarf kann der Auszug herausgezogen und genutzt werden. Dies ist ebenso bei einem Handtuchhalter oder einem Teleskopauszug. Im Fall der Verwendung als Fahrradschloss, wobei dies auf jedes Gerät mit einem rohrförmigen Körper übertragbar ist, so neben Fahrrädern auch auf Ski- oder Wanderstöcke, oder auch auf Motorräder, Kinderwägen, Scooter, Jetskis, Bollennrägen und dergleichen mehr, kann der Auszug ein Schloss vorsehen, mit dem das Gerät angekettet werden kann.

In einer ersten Ausgestaltungsform kann vorgesehen sein, dass das Verbindungselement eine verwindungssteife Stange ist und wenigstens einen mit dem Betätigungselement zusammenwirkenden Werkzeugabschnitt aufweist. Insbesondere ist eine solche Lösung bei Haken und Haltern sinnvoll, wenn diese nach dem Herausziehen in Querrichtung belastbar sein sollen. Wird der Auszug nunmehr so weit aus dem Rohrende gezogen, dass das als Stange ausgestaltete Verbindungselement ganz durch den Anker hindurch herausgezogen ist, kann das Betätigungselement des Ankers mit einem am Ende der Stange vorgesehenen Werkzeugabschnitt in Kontakt geraten. Durch eine Drehung des Auszugs, und mit ihm der verwindungssteifen Stange, kann das Betätigungselement bedient und das Spreizelement aufgespreizt werden. So ist eine Installation, im Zweifel auch eine Deinstallation möglich.

In konkreter Ausgestaltung kann hierbei das Verbindungselement zumindest einen Mehrkantabschnitt ausbilden, wobei dem Betätigungselement eine mit dem Mehrkantabschnitt korrespondierende Mehrkantaufnahme zugeordnet ist. Handelt es sich hierbei etwa um einen Sechskant, so kann bei einem Verlust des Auszugs mit dem Verbindungselement auch mit einem herkömmlichen Sechskantschlüssel gearbeitet werden. Dies lässt sich zwanglos auf weitere Werkzeugformen übertragen.

Auch ist es möglich, vorzusehen, dass der Auszug eine Kappe mit einem Montageprofil zur Übertragung einer Kraft auf das Betätigungselement aufweist. Auf diese Weise kann das Werkzeug direkt an der Kappe des Auszugs angesetzt werden.

Alternativ zu einer verwindungssteifen Stange kann das Verbindungselement jedoch auch flexibel sein und wenigstens einen zugfesten Seilzug umfassen. Dies ist insbesondere dann sinnvoll, wenn der Auszug nicht auf Querdruck, sondern auf Zug beansprucht wird. Dies lässt sich ebenfalls als Aufhängung nutzen. Hierbei kann es auch vorgesehen sein, dass das Verbindungselement ein doppelt geführter Seilzug ist, welcher durch zwei benachbarte Durchlässe des Ankers geführt sind, wobei eine Umbiegung des Seilzugs zwischen den Durchlässen das Anschlagelement ausbildet. Ein separates Anschlagelement kann in diesem Fall entfallen und die beiden Enden des einzigen Seilzugs sind vorzugsweise mit dem Auszug verbunden.

Um auch hier den Auszug als Werkzeug zur Befestigung des Ankers auszubilden, kann mit besonderem Vorteil dem Auszug ein mit dem Betätigungselement zusammenwirkender Werkzeugabschnitt zugeordnet sein, welcher in einem eingeschobenen Zustand mit dem Betätigungselement zusammenwirkt. Dreht man dann den Auszug im eingeschobenen Zustand, so verrastet der Werkzeugabschnitt des Auszugs mit dem Betätigungselement des Ankers und das Spreizelement des Ankers wird abgespreizt oder ausgerückt.

Hierbei ist es zusätzlich möglich, den Werkzeugabschnitt mit dem Auszug lösbar, aber kraftschlüssig zu verbinden. Dies hat den Vorteil, dass zum Einen zwischen dem Auszug und dem Anker im eingeschobenen Zustand des Auszugs etwas Platz verbleibt, so dass der Auszug nicht an den Anker anstößt, zum Anderen kann durch eine Wegnahme des Werkzeugabschnitts von dem Auszug der Anker nicht mehr ohne passendes Werkzeug von Dritten entfernt werden. Handelt es sich um ein individuelles Werkzeug, so ist der Anker auf diese Weise gesichert.

Wie bereits mehrfach angesprochen, kann das Auszugelement so ausgestaltet sein, dass es als Fahrradschloss oder eine vergleichbare Lösung für Gegenstände mit Rohrenden dient. Dabei kann vorgesehen sein, dass der Auszug als Schloss ausgebildet ist, wobei das Verbindungselement an einer ersten Verbindungsstelle unlösbar und an einer zweiten Verbindungsstelle lösbar, jedoch durch das Schloss gesichert, mit dem Auszug verbunden ist. Hierdurch kann eine Halteschlaufe gebildet werden, die an dem Schloss geöffnet und wieder geschlossen werden kann, wobei zwischendurch ein Umgreifen eines unbeweglichen Gegenstand, etwa einer Halterung in Form eines Fahrradständers, erfolgen kann, so dass die Halterung von der Halteschlaufe umgriffen und damit mit dem zu sichernden Gegenstand verbunden ist. Die Länge des Verbindungselements kann zudem so gewählt sein, dass es auch ohne externen festen Gegenstand, nämlich beispielsweise durch ein Durchführen des Verbindungselements durch ein Vorderrad und den Rahmen, zur Sicherung eingesetzt werden kann. Insbesondere kann es sich bei dem Schloss um ein mechanisches Schlüssel- oder Zahlenschloss handeln, jedoch ebenso um ein elektrisches Schloss mit einer Öffnungssensorik oder ein Interface, insbesondere ein Mobilgeräteinterface. Im letzteren Fall kann die erforderliche Elektronik im Anker oder im Anschlagelement aufgenommen und eine Datenverbindung drahtlos oder über das Verbindungselement hergestellt sein. Dann muss der Benutzer lediglich über eine App auf seinem Mobilgerät einen Öffnungsbefehl geben und das Schloss, welches diesen Öffnungsbefehl erhält, reagiert hierauf.

Auch ist es möglich, dem Anker oder dem Anschlagelement, das hierfür extra verbreitert und um einen Hohlraum zur Aufnahme der erforderlichen Elektronik erweitert sein kann, elektronische Kommunikationsmittel, insbesondere ein GPS-Modul, ein Bluetooth-Modul oder ein ZigBee-Modul, zuzuordnen. Insbesondere eine Ortung der Vorrichtung ist auf diese Weise möglich, etwa wenn das mit dem Anschlagelement versehene Gerät entwendet werden sollte. Auch bei einem Abtrennen des Auszugs verbleibt auf diese Weise das elektronische Kommunikationsmittel in dem Rohr, in dessen Ende die Vorrichtung eingesteckt wurde und bleibt auch bei einem Abtrennen des Auszugs betriebsbereit.

Auch eine elektronische Alarmschaltung kann dem Anker und/oder dem Anschlagelement zugeordnet sein, wobei diese auch einen akustischen Signalgeber aufweisen kann, um im Alarmfall ein entsprechendes Alarmsignal aussenden zu können. Zudem kann eine Datenübertragung zur Ortung ausgestrahlt werden, wenn ein Alarmfall eintritt. Ein solcher Alarmfall kann insbesondere dann überwacht werden, wenn das Schloss aktiviert wurde. Ist also der Auszug herausgezogen und das Schloss geschlossen und verriegelt, wird der Zustand des Verbindungselements überwacht. Dies kann etwa ein über mehrere Stränge des Verbindungselements gesandtes und zurück empfangenes Statussignal sein, welches im Fall eines Auftrennens des Verbindungselements den Sender nicht mehr erreicht. Dadurch, dass auch bei einem Abtrennen des Schlosses die Elektronik beim Anker oder bei dem hinter dem Anker in dem Rohr gehaltenen Anschlagelement verbleibt, kann im Falle eines Diebstahls der Täter die Signalquelle nicht entfernen und der geschützte Gegenstand wird für den Dieb uninteressant.

In konkreter Ausgestaltung kann das Verbindungselement aus Metall oder aus Kunststoff hergestellt sein. Auch kann das Verbindungselement eine Ummantelung aus Kunststoff oder natürlichem Kautschuk aufweisen, um es handhabbarer zu machen und besser vor Beschädigungen zu schützen.

Schließlich kann vorgesehen sein, dass der Auszug als Steckelement ausgebildet ist, welches in dem Rohrende durch Reibschluss, aufgrund magnetischer Anziehungskraft oder durch mechanischen Kraftschluss gehalten ist und das Rohrende im eingesteckten Zustand verschließt. Sitzt der Auszug zu locker auf dem Rohrende, so kann er anderenfalls während der Fahrt mit einem Fahrrad, an dem das Auszugelement befestigt ist, der Auszug herausfallen und während der Fahrt stören.

Die vorstehend beschriebene Erfindung wird im Folgenden anhand eines Ausführungsbeispiels näher erläutert.

Es zeigen
- Figur 1: ein Auszugelement umfassend einen Anker und einen Auszug, sowie ein Verbindungselement zur Verbindung dieser beiden Teile, wobei das Auszugelement in Aufbewahrungsstellung im Rohr eines Fahrradlenkers befestigt ist, in einem perspektivischen Teilschnitt,
- Figur 2: einen Auszug mit einem alternativen, festen Werkzeugabschnitt in perspektivischer Darstellung mit Blick auf eine Kappenseite,
- Figur 3: den Auszug gemäß Figur 2 in perspektivischer Darstellung mit Blick auf eine Werkzeugabschnittseite,
- Figur 4: eine Alternative Ausgestaltung des Auszugs gemäß Figur 3 mit gelöstem Werkzeugabschnitt,
- Figur 5: einen Anker in einem perspektivischen Teilschnitt,
- Figur 6: das Auszugelement gemäß Figur 1 in einer Benutzungsstellung in perspektivischer Darstellung, sowie
- Figur 7: eine Variante des Auszugelements gemäß Figur 6 mit einem Elektronikmodul an dem Anschlagelement.

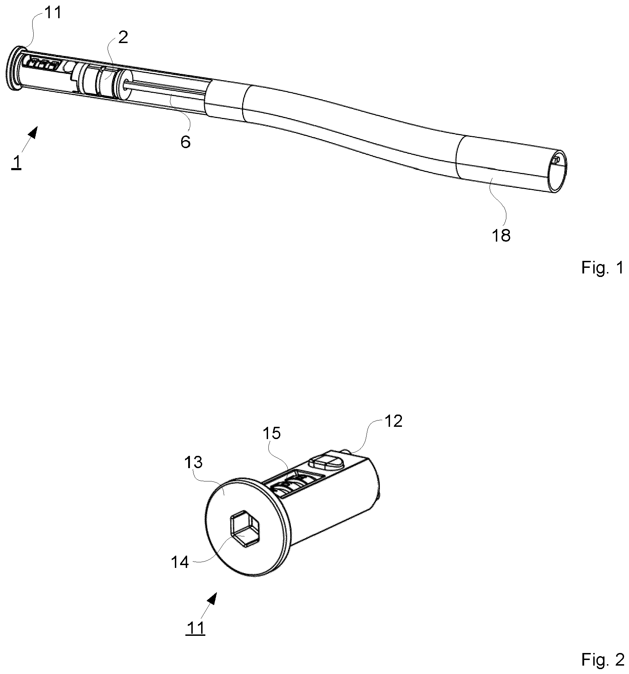

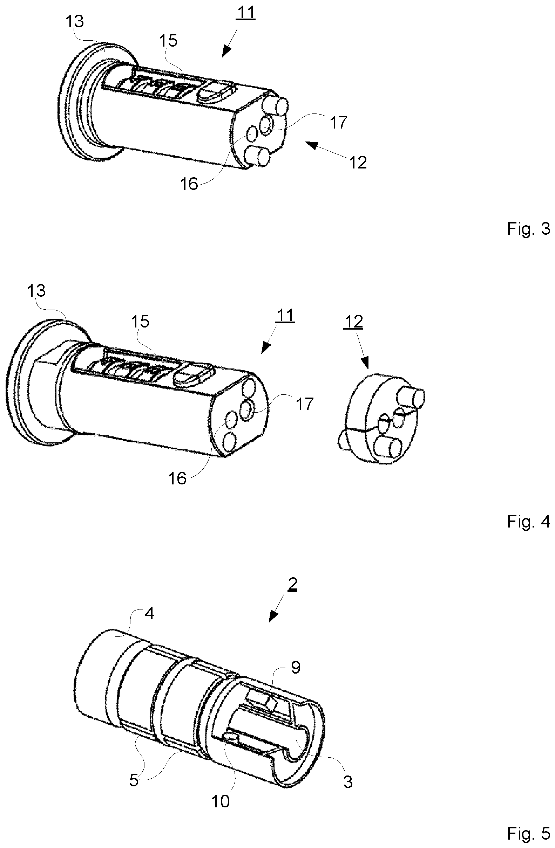

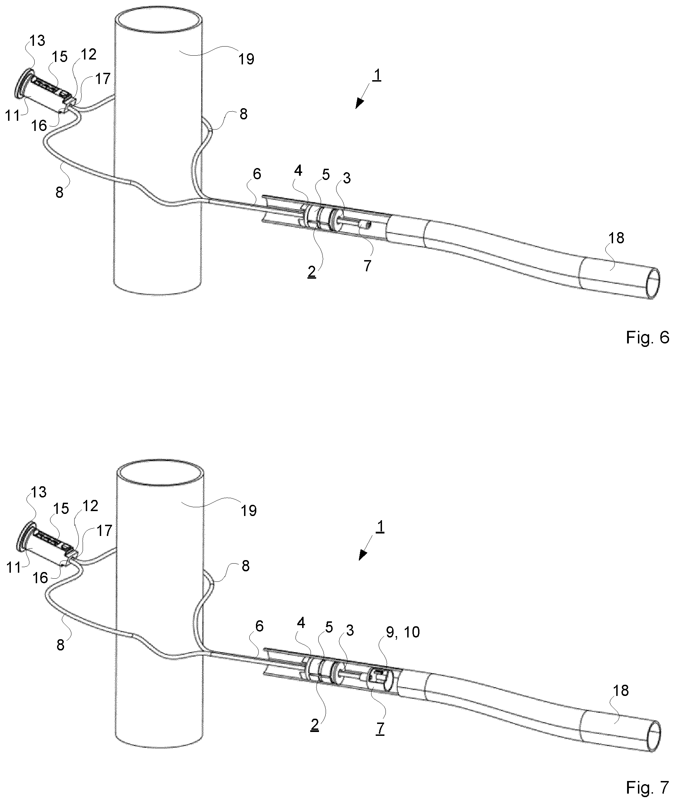

Figur 1 zeigt ein Auszugelement 1 in Form eines Fahrradschlosses, welches in einem Fahrradlenker angeordnet ist. Der Fahrradlenker ist im Wesentlichen ein Rohr 18, welches randseitig offen ist. An diesem Rohrende ist ein Auszug 11 mit einem Anker 2 eingeschoben und in innigem Kontakt. Der Anker 2 weist einen Durchlass 3 auf, durch welchen ein Verbindungselement 6 hindurchgeführt ist. Der Durchlass 3 ist in Figuren 5, 6 und 7 näher dargestellt. Das Verbindungselement 6 kann, wie in Figuren 6 und 7 dargestellt, ein Anschlagelement 7 aufweisen, so dass dieses an dem Anker 2 anschlägt, wenn der Auszug 2 weit aus dem Rohr 18 herausgezogen wird.

Zunächst hält der Auszug 11 aufgrund von Reibschluss am äußeren Ende des Rohrs 18. Bei einer ersten Installation der Vorrichtung in dem Rohr 18 werden Auszug 11 und Anker 2 gemeinsam in das Rohrende eingeführt. Figur 2 zeigt, dass der Auszug 11 auf der von dem Anker 2 abgewandten Seite eine Kappe 13 aufweist, welche im eingesteckten Zustand das Rohrende verschließt. An dieser Kappe 13 ist ein Montageprofil 14, hier ein Innensechskant, vorgesehen, mit dem der Auszug 11 auch im eingesteckten Zustand noch gedreht werden kann. Neben einem Schloss 15, das in den Auszug 11 integriert ist und auf das später zurückgekommen wird, weist der Auszug 11 einen Werkzeugabschnitt 12 auf, welcher mit einem Betätigungselement 4 des Ankers 2 zusammenwirkt. Dieser Werkzeugabschnitt 12 ist beispielhaft in Figur 3 gezeigt und umfasst zwei zylindrische Erhebungen, welche in korrespondierende Gegenstücke am Betätigungselement 4 des Ankers 2 eingreifen können.

Wird nach dem Einstecken nunmehr der Auszug 11 gedreht, während der Werkzeugabschnitt 12 mit dem Betätigungselement 4 zusammenwirkt, so betätigt das Betätigungselement 4 Spreizelemente 5 des Ankers 2, welche hierdurch radial ausrücken und sich gegen die Innenwand des Rohrs 18 drücken, bis eine innige, in Längsrichtung gesicherte Verbindung entstanden ist. Der Anker 2 ist nun in dem Rohr 18 gehalten und der Auszug 11 kann nicht mehr mit dem Anker 2 ganz aus dem Rohr gezogen werden.

Figur 4 zeigt eine Abwandlung, bei welcher der Werkzeugabschnitt 12 von dem Auszug 11 lösbar ist. Da es sich hier nurmehr um ein zwischengelegtes Teil handelt, kann dieses nach der Installation entfernt werden, so dass das Auszugelement 1 ohne dieses Werkzeug nicht mehr ohne Weiteres ausgebaut werden kann. An dem Auszug 11 sind eine erste Verbindungsstelle 16 und eine zweite Verbindungsstelle 17 vorgesehen. Das Verbindungselement 6, welches in Form eines Stahlseils ausgebildet sein kann, ist hierbei an der ersten Verbindungsstelle 16 fest verbunden und weist Mittel zur lösbaren Verbindung an der zweiten Verbindungsstelle 17 auf. Dies kann ein Stecker sein, welcher in dem Schloss 15 festgehalten werden kann und bei einem Öffnen des Schlosses 15 freigegeben wird. Die erste Verbindungsstelle 16 und die zweite Verbindungsstelle 17 können dabei alternativ auch an unterschiedlichen Seiten des Auszugs 11 angeordnet sein.

In Figur 5 ist der Anker gezeigt, welcher mit seinen Spreizelementen 5 in dem Rohr 18 festgelegt werden kann. Hierzu dient das Betätigungselement 4, welches korrespondierende Öffnungen aufweist, in welche der Werkzeugabschnitt 12 des Auszugs 11 eingreifen kann. Durch eine Drehung des Werkzeugabschnitts 12 und damit des Betätigungselements 4 werden die Spreizelemente 5 aufgespreizt und halten den Anker 2 in dem Rohr 18 fest.

Am Ende des Ankers ist der Durchlass 3 zu erkennen, durch welchen das Verbindungselement 6 hindurchgeführt wird. In diesem Bereich ist ein Aufnahmeraum für elektronische Kommunikationsmittel 9 und eine elektronische Alarmschaltung 10 gebildet. Die elektronischen Kommunikationsmittel 9 umfassen einen GPS-Sender, die elektronische Alarmschaltung 10 erkennen, ob das Schloss 15 gesichert ist und geben im Fall einer Auftrennung der Verbindungselement 6 oder bei einer starken mechanischen Erschütterung ein akustisches Alarmsignal ab. Da die elektronische Alarmschaltung 10 in dem Rohr 18 verbaut ist, kann ein Dieb das Fahrrad nicht unbemerkt mitnehmen, auch wenn der abgeschnittene Auszug 11 zurückbleibt.

Figuren 6 und 7 zeigen, wie das Auszugelement 1 eingesetzt wird. Hierbei sieht das Auszugelement 1 in Figur 6 vor, dass als Verbindungselement 6 ein doppelter Seilzug 8 aus Stahlseil eingesetzt wird, der durch den Durchlass 3 des Ankers geführt ist und aus Sicht des Auszugs 11 hinter dem Anker 2 ein Anschlagelement 7 aufweist. Das Anschlagelement 7 verhindert, dass der Auszug 11 über den Anker 2 hinweg herausgezogen wird. In Figur 7 sind dem Anschlagelement 7 der Aufnahmeraum für die elektronischen Kommunikationsmittel 9 und die elektronische Alarmschaltung 10 zugeordnet, wie zu Figur 5 beschrieben. Weitere Unterschiede zwischen Figuren 6 und 7 bestehen nicht.

Die Seilzüge 8 sind um eine Halterung 19 herumgelegt, etwa einen Fahrradständer, und an dem Auszug 11 wieder zusammengeführt. Dort ist einer der Seilzüge 8 an der ersten Verbindungsstelle 16 des Auszugs 11 fest verbunden, der andere Seilzug 8 weist einen endständigen Verbinder auf, mit dem er in der zweiten Verbindungsstelle 17 lösbar aufgenommen ist. Über das Schloss 15 kann die zweite Verbindungsstelle 17 durch eine korrekte Zahlenkombination mechanisch geöffnet und der Verbinder freigegeben werden.

Vorstehend beschrieben ist somit ein Auszugelement im Allgemeinen und ein Fahrradschloss in Form eines solchen Auszugelements im Besonderen, welches im Zuge einer Nachrüstung in einem Rohrende kraftschlüssig verankert werden kann.

### BEZUGSZEICHENLISTE

- 1: Auszugelement
- 2: Anker
- 3: Durchlass
- 4: Betätigungselement
- 5: Spreizelement
- 6: Verbindungselement
- 7: Anschlagelement
- 8: Seilzug
- 9: elektronische Kommunikationsmittel
- 10: elektronische Alarmschaltung
- 11: Auszug
- 12: Werkzeugabschnitt
- 13: Kappe
- 14: Montageprofil
- 15: Schloss
- 16: erste Verbindungsstelle
- 17: zweite Verbindungsstelle
- 18: Rohr
- 19: Halterung

## Patentansprüche

1. Auszugelement, umfassend einen Anker (2) zur unbeweglichen Fixierung in einem wenigstens einseitig offenen Rohr (18), wobei der Anker (2) vermittels wenigstens eines Verbindungselements (6) mit einem an einem Rohrende des Rohrs (18) ein- und ausschiebbaren Auszug (11) verbunden ist, wobei das Verbindungselement (6) durch wenigstens einen Durchlass (3) des Ankers (2) hindurchgeführt ist und ein Anschlagelement (7) aufweist, welches einen Durchgang des Verbindungselements durch den Durchlass (3) verhindert, wobei der Anker (2) wenigstens ein vermittels eines Betätigungselements (4) radial ausrückbares Spreizelement (5) aufweist und durch Ausrücken des Spreizelements (5) an einer Innenwandung des Rohrs (18) kraftschlüssig festlegbar ist, **dadurch gekennzeichnet, dass** das Verbindungselement (6) eine verwindungssteife Stange ist und wenigstens einen mit dem Betätigungselement (4) zusammenwirkenden Werkzeugabschnitt (12) aufweist.

2. Auszugelement gemäß Anspruch 1, **dadurch gekennzeichnet, dass** das Verbindungselement (6) zumindest einen Mehrkantabschnitt ausbildet, wobei dem Betätigungselement (4) eine mit dem Mehrkantabschnitt korrespondierende Mehrkantaufnahme zugeordnet ist.

3. Auszugelement gemäß einem der vorhergehenden Ansprüche, **dadurch gekennzeichnet, dass** der Auszug (11) eine Kappe (13) mit einem Montageprofil (14) zur Übertragung einer Kraft auf das Betätigungselement (4) aufweist.

4. Auszugelement, umfassend einen Anker (2) zur unbeweglichen Fixierung in einem wenigstens einseitig offenen Rohr (18), wobei der Anker (2) vermittels wenigstens eines Verbindungselements (6) mit einem an einem Rohrende des Rohrs (18) ein- und ausschiebbaren Auszug (11) verbunden ist, wobei das Verbindungselement (6) durch wenigstens einen Durchlass (3) des Ankers (2) hindurchgeführt ist und ein Anschlagelement (7) aufweist, welches einen Durchgang des Verbindungselements durch den Durchlass (3) verhindert, wobei der Anker (2) wenigstens ein vermittels eines Betätigungselements (4) radial ausrückbares Spreizelement (5) aufweist und durch Ausrücken des Spreizelements (5) an einer Innenwandung des Rohrs (18) kraftschlüssig festlegbar ist, **dadurch gekennzeichnet, dass** das Verbindungselement (6) flexibel ist und wenigstens einen zugfesten Seilzug (8) umfasst, wobei das Verbindungselement (6) ein doppelt geführter Seilzug (8) ist, welcher durch zwei benachbarte Durchlässe (3) des Ankers (2) geführt sind, wobei eine Umbiegung des Seilzugs (8) zwischen den Durchlässen (3) das Anschlagelement ausbildet.

5. Auszugelement gemäß Anspruch 4, **dadurch gekennzeichnet, dass** dem Auszug (11) ein mit dem Betätigungselement (4) zusammenwirkender Werkzeugabschnitt (12) zugeordnet ist, welcher in einem eingeschobenen Zustand mit dem Betätigungselement (4) zusammenwirkt.

6. Auszugelement gemäß Anspruch 5, **dadurch gekennzeichnet, dass** der Werkzeugabschnitt (12) mit dem Auszug (11) lösbar, aber kraftschlüssig verbunden ist.

7. Auszugelement gemäß einem der Ansprüche 5 oder 6, **dadurch gekennzeichnet, dass** der Auszug (11) eine Kappe (13) mit einem Montageprofil (14) zur Übertragung einer Kraft auf das Betätigungselement (4) aufweist.

8. Auszugelement gemäß einem der Ansprüche 4 bis 7, **dadurch gekennzeichnet, dass** der Auszug (11) als Schloss (15) ausgebildet ist, wobei das Verbindungselement (6) an einer ersten Verbindungsstelle (16) unlösbar und an einer zweiten Verbindungsstelle (17) lösbar, jedoch durch das Schloss (15) gesichert, mit dem Auszug (11) verbunden ist.

9. Auszugelement gemäß Anspruch 8, **dadurch gekennzeichnet, dass** das Schloss (15) mechanisch als Schlüssel- oder Zahlenschloss oder elektrisch über eine Sensorik oder ein Mobilgeräteinterface betätigbar ist.

10. Auszugelement, umfassend einen Anker (2) zur unbeweglichen Fixierung in einem wenigstens einseitig offenen Rohr (18), wobei der Anker (2) vermittels wenigstens eines Verbindungselements (6) mit einem an einem Rohrende des Rohrs (18) ein- und ausschiebbaren Auszug (11) verbunden ist, wobei das Verbindungselement (6) durch wenigstens einen Durchlass (3) des Ankers (2) hindurchgeführt ist und ein Anschlagelement (7) aufweist, welches einen Durchgang des Verbindungselements durch den Durchlass (3) verhindert, wobei der Anker (2) wenigstens ein vermittels eines Betätigungselements (4) radial ausrückbares Spreizelement (5) aufweist und durch Ausrücken des Spreizelements (5) an einer Innenwandung des Rohrs (18) kraftschlüssig festlegbar ist, **dadurch gekennzeichnet, dass** das Anschlagelement (7) elektronische Kommunikationsmittel (9), insbesondere ein GPS-Modul, ein Bluetooth-Modul oder ein ZigBee-Modul, zugeordnet sind, welche in einer Erweiterung des Anschlagelements mit einem Hohlraum zur Aufnahme der elektronischen Kommunikationsmittel angeordnet sind.

11. Auszugelement gemäß einem der vorhergehenden Ansprüche, **dadurch gekennzeichnet, dass** das Verbindungselement (6) aus Metall oder aus Kunststoff hergestellt ist.

12. Auszugelement gemäß einem der vorhergehenden Ansprüche, **dadurch gekennzeichnet, dass** das Verbindungselement (6) eine Ummantelung aus Kunststoff oder natürlichem Kautschuk aufweist.

13. Auszugelement gemäß einem der vorhergehenden Ansprüche, **dadurch gekennzeichnet, dass** der Auszug (11) als Steckelement ausgebildet ist, welches in dem Rohrende durch Reibschluss, aufgrund magnetischer Anziehungskraft oder durch mechanischen Kraftschluss gehalten ist und das Rohrende im eingesteckten Zustand verschließt.

14. Auszugelement gemäß einem der vorhergehenden Ansprüche, **dadurch gekennzeichnet, dass** dem Anker (2) und/oder dem Anschlagelement (7) eine elektronische Alarmschaltung (10), vorzugsweise mit einem akustischen Signalgeber, zugeordnet ist.
